# FASCICULE DE BREVET EUROPEEN

(11) **EP 1 481 833 B1**
(45) Date de publication et mention de la délivrance du brevet: **26.10.2005**
(21) Numéro de dépôt: 03702665.5
(22) Date de dépôt: 06.02.2003
(51) Int. Cl.: B60K 6/12

(54) **SYSTEME DE TRACTION HYBRIDE POUR VEHICULES**
HYBRIDANTRIEBSSYSTEM FÜR FAHRZEUGE
HYBRID TRACTION SYSTEM FOR VEHICLES

(30) Priorité: 07.02.2002 ES 200200302
(43) Date de publication de la demande: 01.12.2004
(73) Titulaire: Gonzalez Mena, Francisco, 29680 Estepona (ES)
(72) Inventeur: Gonzalez Mena, Francisco, 29680 Estepona (ES)
(74) Mandataire: Arpe Fernandez, Manuel de
(86) Numéro de dépôt international: PCT/ES2003/000068
(87) Numéro de publication internationale: WO 2003/066360

(56) Documents cités:
- EP-A1- 0 645 272
- DE-A1- 19 946 711
- GB-A- 1 357 696
- US-A- 3 986 575
- US-A- 4 123 910

## Description

### OBJET DE L'INVENTION

La présente invention consiste dans un système de traction hybride comportant un moteur pneumatique et un moteur à combustion avec une sur-alimentation d'air au moyen du moteur pneumatique afin de réduire la consommation de carburant du moteur à combustion, et afin de fournir à l'embrayage du système une traction combinée des deux moteurs.

Le système consiste dans le couplage mécanique et pneumatique d'un moteur pneumatique et d'un moteur à combustion, de sorte que l'échappement du premier est uni à l'admission du moteur à combustion pour fournir une sur-alimentation et, en plus, une traction, par le biais de l'union mécanique entre les deux moteurs qui est effectué, par exemple, à travers leurs vilebrequins, de telle sorte que la somme de leurs tractions est transmise à l'embrayage du système.

Le système de traction comporte deux moteurs qui resteront toujours unis de façon pneumatique et mécanique, en fonction du modèle de traction.

### ANTECEDENTS DE L'INVENTION

La sur-alimentation de moteurs à combustion est une technique utilisée depuis de nombreuses années, afin de réussir à économiser du carburant et en outre, de fournir plus de puissance au moteur.

Il existe des sur-alimentations par actionnement mécanique, comportant un compresseur qui comprime le fluide dans l'admission du moteur à combustion. Néanmoins, après des essais menés pendant de longues années, cette formule de sur-alimentation a été abandonnée, car la consommation du moteur est pénalisée par rapport à un moteur à aspiration naturelle. Sa forme la plus étendue est la turbo-compression, dans ses différentes variantes.

Une autre manière de suralimenter les moteurs à combustion est basée sur l'utilisation des gaz d'échappement d'un moteur pneumatique solidaire de celui-ci, de sorte que la sur-alimentation est extérieure, et qu'il faut emmagasiner l'air comprimé dans des réservoirs et le doser à une certaine pression pour faire en sorte qu'un moteur pneumatique fournisse à l'échappement un débit d'air approprié et applicable au moteur à combustion lui-même, même si l'échappement du moteur pneumatique n'est pas à la pression atmosphérique, mais à la pression de sur-alimentation du moteur à combustion, ce qui réduit sa performance.

Le brevet européen 0779419 décrit un système de sur-alimentation basée sur un compresseur électrique qui agit sur le moteur à combustion. Le brevet européen EP 0 645 272 A montre les caractéristiques du préambule de la revendication 1.

Quoiqu'il en soit et bien qu'il existe de nombre systèmes de sur-alimentation des moteurs à combustion, aucune performance optimale n'avait été obtenue jusqu'ici, et ce, parce que dans les cas où la performance est théoriquement élevée, la consommation n'en est pas réduite pour autant. La présente invention a pour objet de concevoir une sur-alimentation produite par la sortie des gaz d'un moteur pneumatique, qui est mécaniquement solidaire du moteur à combustion, par exemple, à travers l'union de ses vilebrequins, cela est défini comme une traction-hybride.

### DESCRIPTION DE L'INVENTION

Le système préconisé de traction hybride avec sur-alimentation du moteur à combustion, consiste dans le couplage d'un moteur à combustion et d'un moteur pneumatique, de sorte que l'union mécanique est établie, par exemple, entre les vilebrequins des deux moteurs, le moteur à combustion n'ayant pas besoin du moteur à démarrage classique et, en même temps, l'union ou couplage des deux moteurs est pneumatique, et de sorte que l'échappement du moteur pneumatique est relié à l'admission du moteur à combustion pour suralimenter ce dernier en comburant.

Le moteur pneumatique s'appuie en toute logique sur un système comprenant un réservoir d'air à haute pression, un compresseur électrique pour la recharge, une soupape de commande et un système de régulation, etc. La capacité du système pneumatique est proportionnelle à l'économie de carburant dans le moteur à combustion.

Les deux moteurs peuvent être couplés dans des positions différentes, c'est-à-dire, avec le moteur pneumatique près de l'embrayage, en utilisant un système de couplage unissant les vilebrequins des deux moteurs, de sorte que dans ce type d'union, il peut y avoir traction sans faire marcher le moteur à combustion, qui est découplé et ouvre son échappement dans l'atmosphère. Une autre sorte de couplage se produit lorsque le moteur à combustion est situé près de l'embrayage, il est alors nécessaire que ce dernier soit en fonctionnement pour obtenir la traction, alors que dans un dernier cas, ou une dernière sorte d'union est semblable à celle citée en premier lieu, mais sans l'union mécanique avec le moteur à combustion, en conservant l'union pneumatique qui, en sur-alimentant ce dernier moteur, recharge les réservoirs d'air au moyen d'un compresseur.

Préférablement, l'union des deux moteurs doit être réalisée de telle sorte que le moteur à combustion soit situé près de l'embrayage du véhicule, et le moteur pneumatique soit uni à l'autre extrémité du vilebrequin du moteur à combustion, on utilise dans ce cas une transmission semi-automatique à laquelle s'ajoute la technologie de l'alternateur à 42 volts, car c'est cette capacité électrique qui permet l'auto-recharge en marche et à l'arrêt.

Le système comprend également une centrale de contrôle qui permet d'effectuer un découplage automatique des deux moteurs, c'est-à-dire de leurs vilebrequins Ce dispositif peut être constitué par un électro-embrayage permettant un couplage en douceur.

Le système inclut également une électrovanne, montée à la sortie de l'échappement du moteur pneumatique, à l'endroit où celui-ci est raccordé à l'admission du moteur à combustion, dont l'électrovanne communique avec l'extérieur à travers un filtre à air, le tout de telle sorte que quand les deux moteurs fonctionnent en même temps, le moteur pneumatique fournit de l'air à pression à l'admission du moteur à combustion, et transmet la somme de ses deux tractions à l'embrayage du moteur à combustion.

L'électrovanne ci-dessus visée reste donc fermée et le système de couplage des deux vilebrequins reste couplé, de sorte que lorsque le moteur pneumatique n'agit pas, l'électrovanne reste ouverte et assure l'arrivée d'air au moteur à combustion, et le couplage des deux moteurs est libéré.

Le système comprend aussi un réservoir d'air à pression, une commande de la vanne, un système d'auto-rechargement, une batterie à grande capacité, un réservoir de carburant, ainsi qu'une prise d'air comprimé extérieure reliée au réservoir d'air à pression et une prise électrique extérieure pour alimenter le système d'auto-rechargement, pour opérer le rechargement des réservoirs d'air, de sorte que la prise électrique peut être raccordée à la batterie à grande capacité.

Le fait de ne pas pouvoir séparer le système de traction du système de sur-alimentation est dû à ce que le système cité permet d'utiliser les gaz d'échappement d'un moteur pneumatique pour alimenter un moteur à combustion, ce qui réduit la consommation de ce dernier, grâce à une union mécanique et pneumatique des deux moteurs. En somme, l'obtention d'une traction hybride combustion-pneumatique implique de sur-alimenter la première.

### DESCRIPTION DES DESSINS

Comme un complément de la description à laquelle nous allons procéder et afin de permettre une meilleure compréhension des caractéristiques de l'invention, on trouvera en annexe du présent mémoire descriptif une feuille simple comportant des plans qui donnent une représentation schématique du système de sur-alimentation d'un moteur à combustion, et ce, conformément à l'objet de l'invention, en décrivant le cas préférable dans lequel le moteur à combustion est placé à côté de l'embrayage du véhicule.

### REALISATION PREFERABLE DE L'INVENTION

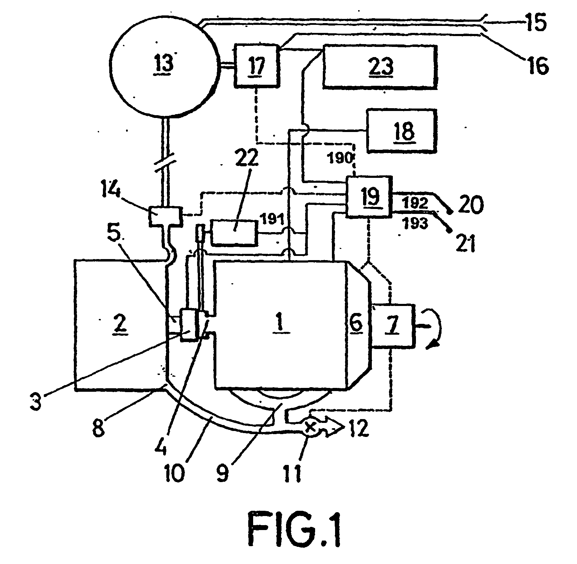

A l'appui de la figure citée, on pourra constater que le système de l'invention comprend un moteur à combustion 1 et un moteur pneumatique 2, tous deux réunis par un couplage 3 qui peut être direct ou à travers des courroies et des poulies, et dont le couplage 3 correspond aux vilebrequins 4 et 5 des deux moteurs, à combustion 1 et pneumatique 2, respectivement.

Le moteur à combustion 1, compte un embrayage 6 avec sa boite à vitesses 7, à travers laquelle le mouvement est transmis à une roue, comme c'est le cas de manière conventionnelle.

Cependant, conformément à l'invention, on peut envisager que le dispositif d'embrayage 6 et la boîte à vitesses se trouvent du côté du moteur pneumatique 2.

En plus d l'union ou couplage mécanique 3 entre les vilebrequins 4 et 5 des deux moteurs, à combustion 1 et pneumatique 2, il existe un raccordement ou une union pneumatique entre les deux, qui consiste en ce que la sortie ou échappement 8 des gaz du moteur pneumatique 2 est reliée à l'admission 9 du moteur à combustion, à travers une conduite à pression 10, et dispose d'une électrovanne 11 qui communique avec l'extérieur à travers un filtre 12.

La sur-alimentation d'air fournie par le moteur pneumatique 2 au moteur à combustion 1, combinée avec l'union mécanique entre les vilebrequins 4 et 5 des deux moteurs, permet d'obtenir une somme de puissance en unissant les deux vilebrequins, le moteur à combustion 1 n'a donc pas besoin de moteur à démarrage, et obtient une sur-alimentation de comburant, de l'échappement 8 du moteur pneumatique jusqu'à l'admission 9 de ce moteur à combustion 1.

Le moteur pneumatique est complété par un système pneumatique qui comprend un réservoir 13 d'air comprimé qui fournit la traction lorsqu'il agit sur le moteur pneumatique 2, qui la transmet au vilebrequin ou à la prise de mouvement du moteur à combustion 1, et en même temps, l'air dont il a besoin à travers l'admission 9 de ce dernier.

Le système comprend, en outre, une prise extérieure d'air comprimé 15, une prise extérieure d'énergie électrique 16, un système d'auto-rechargement 17, par exemple, un compresseur électrique, un réservoir à carburant 18 pour le moteur à combustion 1, et une unité ou centrale de contrôle 19 associée aux actionneurs de l'accélérateur 20 et du frein 21 à travers les arrivées de contrôle 192, 193, pour les signaux électriques générés par lesdits actionneurs 20 et 21.

A la sollicitation de l'accélérateur 20 du véhicule, la centrale de contrôle 19 gouverne la vanne de commande 14 du moteur pneumatique 2, ainsi que le module d'injection de carburant du moteur à combustion 1, et produit la rotation au même régime si le couplage est direct et à un autre régime si l'on utilise des poulies et une courroie. La capacité du système pneumatique et la possibilité de rechargement électrique ou pneumatique, délimitent son utilisation à bas régime.

Le couplage 3 des vilebrequins 4 et 5, et des deux moteurs 1, peut être découplé à travers un ordre transmis par l'unité ou centrale de contrôle 19 elle-même.

Ainsi, lorsque les deux moteurs 1 et 2 fonctionnent en même temps, le moteur pneumatique 2 alimente d'air à pression, à travers la conduite 10, l'admission 9 du moteur à combustion 1, et transmet la somme de ses deux tractions à l'embrayage 6. L'électrovanne 11 reste fermée et le couplage 3 reste couplé, de sorte que lorsque le moteur pneumatique 2 n'agit pas, l'électrovanne 11 reste ouverte et assure l'arrivée d'air au moteur à combustion 1, le couplage 3 étant alors libéré.

Pour sa part, l'unité ou centrale de contrôle 19, règle non seulement les paramètres cités ci-dessus, du moteur à combustion et du moteur pneumatique, mais aussi la vanne de commande 14, le couplage 3, l'électrovanne 11, l'embrayage 6, la boîte à vitesses 7, pour répondre à l'accélérateur 20 ou au frein 21, et produit un fonctionnement en douceur, elle doit permettre plusieurs programmes ou fonctions, comme freiner le moteur pneumatique 2 en chargeant d'air le réservoir 13 ou surveiller l'alternateur 22, qui maintient la batterie chargée.

Il faut dire enfin que le système est complété par la batterie 23 qui peut aussi être rechargée à travers le dispositif de la prise électrique extérieure 16, et qui permet de recharger les réservoirs d'air 13, par l'activation du système d'auto-rechargement 17 sans connexions extérieures.

Sur la figure citée, les raccordements entre l'unité de contrôle 19 et le système d'auto-rechargement 17 sont marqués en pointillés, la vanne de commande 14, l'embrayage et l'électrovanne 11, les sorties de contrôle 19 qui servent à gouverner le système d'auto-rechargement 17 et l'alternateur 22, respectivement, sont indiquées par les références 190 et 191.

## Revendications

1. Système de traction hybride pour les véhicules comprenant:
- un moteur à combustion (1) muni d'une admission d'air (9), d'un alternateur (22) et d'un réservoir à carburant (18),
- un moteur pneumatique à air comprimé (2) avec une vanne électro-pneumatique de commande (14), un échappement d'air (8) et un réservoir d'air comprimé (13),
- un embrayage (6) et une boîte à vitesses (7) pour la mise en oeuvre de la traction des moteurs à combustion et pneumatique (1,2)
***caractérisée,* par** ce que ce système comprend en outre:
- un dispositif de couplage mécanique (3) pour le couplage/découplage du moteur à combustion (1) et du moteur pneumatique (2), de sorte que la traction des deux moteurs peut être additionnée,
- un dispositif de couplage pneumatique constitué par une conduite pneumatique (10), une vanne electro-pneumatique (11) et un filtre à air (12) ayant une sortie vers l'extérieur, pour y raccorder l'échappement d'air (8) du moteur pneumatique (2) et l'admission d'air (9) du moteur à combustion (1), de telle sorte qu'une sur-alimentation de comburant est fournie audit moteur à combustion (1), et
- une unité de contrôle électronique (19) pour la commande des dispositifs et des éléments susvisés (1, 3, 6, 7, 11, 14, 22).

2. Le système, d'après la revendication 1, **caractérisé en ce que** l'embrayage (6) et la boîte à vitesses (7) sont montés du côté du moteur à combustion (1).

3. Le système, d'après la revendication 1, **caractérisé en ce que** l'embrayage (6) et la boîte à vitesses (7) sont montés du côté du moteur pneumatique (2).

4. Système selon la revendication 1, **caractérisé en ce que** seulement le moteur pneumatique (2) est couplé a l'embrayage (6) et le dispositif de couplage (3) s'adapte pour fournir une sur-alimentation au moteur à combustion (1) mouvant le compresseur pneumatique (17) pour le chargement du réservoir d'air comprime (13).

5. Le système, selon la revendication 1, **caractérisé en ce que** le couplage mécanique (3) est prévu entre le vilebrequin (4) du moteur à combustion (1) et le vilebrequin (5) du moteur pneumatique (2).

6. Le système, d'après la revendication 5, **caractérisé en ce que** le couplage mécanique (3) est un couplage direct.

7. Le système, d'après la revendication 5, **caractérisé en ce que** le couplage mécanique (3) est un couplage au moyen de poulies et courroies.

8. Le système, d'après l'une des revendications précédentes, **caractérisé en ce que** le réservoir d'air comprimé (13) est pneumatiquement raccordé à un système d'auto-rechargement d'air comprimé (17) et alimenté en électricité par une batterie électrique à grande capacité (23).

9. Le système, d'après la revendication 8, **caractérisé en ce qu'**une prise électrique extérieure (16) est prévue, pour la fourniture alternative de puissance électrique du système d'auto-rechargement d'air comprimé (17).

10. Le système, selon les revendications 8-9, **caractérisé en ce que** l'unité de contrôle électronique (19), qui est alimentée par la batterie électrique à grande capacité (23), compte en plus une sortie de contrôle (190) servant à commander le système d'auto-rechargement d'air comprimé (17) ainsi qu'une autre sortie de contrôle (191) servant à commander l'alternateur (22), ainsi que les entrées de contrôle respectives (192,193), pour les signaux électriques générés à partir du système d'accélérateur (20) et du système de frein (21) du véhicule.

## Patentansprüche

1. Hybridantriebssystem für Fahrzeuge, mit folgendem Umfang:
- ein Verbrennungsmotor (1) mit einem Lufteinlass 9), einem Wechselstromgenerator (22) und einem Kraftstoffbehälter (18);
- ein Druckluftmotor (2) mit einem elektropneumatischen Steuerventil (14), einem Luftabzug (8) und einem Druckluftbehälter (13),
- eine Kupplung (6) und ein Getriebekasten (7) für die Verwendung des Antriebs des Verbrennungs- und des Druckluftmotors (1, 2)
Dieses System ist **dadurch *gekennzeichnet**,* dass** es zusätzlich Folgendes umfasst:
- eine mechanische Anschlussvorrichtung (3) für den Anschluss /die Trennung des Verbrennungsmotors (1) und des Druckluftmotors (2), respektive, sodass also der Antrieb beider Motoren addiert werden kann;
- eine pneumatische Anschlussvorrichtung, bestehend aus einer Luftdruckleitung (10), einem elektropneumatischen Ventil (11) und einem Luftfilter (12) mit Abzug nach außen, zur Verbindung des Luftabzugs (8) des Druckluftmotors (2) und der Luftzufuhr (9) des Verbrennungsmotors (1), sodass der genannte Verbrennungsmotor (1) verbrennungsfördernd aufgeladen wird; und
- eine elektronische Kontrolleinheit (19) zur Steuerung der genannten Vorrichtungen und Elemente (1, 3, 6, 7, 11, 14, 22).

2. System gemäss der Anspruch 1, **gekennzeichnet dadurch, dass** die Kupplung (6) und der Getriebekasten (7) auf der Seite des Verbrennungsmotors (1) montiert sind.

3. System gemäss der Anspruch 1, **gekennzeichnet dadurch, dass** die Kupplung (6) und der Getriebekasten (7) auf der Seite des Druckluftmotors (2) montiert sind.

4. System gemäss der Anspruch 1, **gekennzeichnet dadurch, dass** nur der Druckluftmotor (2) an die Kupplung (6) montiert ist, die pneumatische Anschlussvorrichtung wird für das Aufladen eines Verbrennungsmotors, der den Kompressor (17) bewegt, angepasst, wobei der Druckluftbehälter (13) aufgefüllt wird.

5. System gemäss der Anspruch 1, **gekennzeichnet dadurch, dass** die mechanische Verbindung (3) zwischen der Kurbelwelle (4) des Verbrennungsmotors (1) und der Kurbelwelle (5) des Druckluftmotors (2) vorgesehen ist.

6. System gemäss Anspruch 5, **gekennzeichnet dadurch, dass** die mechanische Verbindung (3) eine direkte Verbindung ist.

7. System gemäss Anspruch 5, **gekennzeichnet dadurch, dass** die mechanische Verbindung (3) eine Verbindung über Scheiben und Riemen ist.

8. System gemäss einer der vorangegangenen Ansprüche, **gekennzeichnet dadurch, dass** der Druckluftbehälter (13) pneumatisch mit einem selbst aufladenden Druckluftsystem (17) verbunden ist, das von einer Hochleistungsbatterie (23) elektrisch gespeist wird.

9. System gemäss Anspruch 8, **gekennzeichnet dadurch, dass** ein elektrischer Außenanschluss (16) zur alternativen Versorgung des selbst aufladenden Druckluftsystems (17) mit elektrischem Strom vorgesehen ist.

10. System gemäss einer der Ansprüche 8-9, **gekennzeichnet dadurch, dass** die elektronische Kontrolleinheit (19), die von der Hochleistungsbatterie (23) versorgt wird, außerdem einen Kontrollausgang (190) zur Regelung des Druckluftselbstaufladesystems (17) und einen weiteren Kontrollausgang (191) zur Regelung des Wechselstromgenerators (22) hat, sowie die entsprechenden Kontrolleingänge (192, 193) für elektrische Signale, die vom Gaspedal (20) und vom Bremssystem (21) des Fahrzeugs ausgehen.

## Claims

1. Hybrid drive system for vehicles that comprises:
- A combustion engine (1) with an air input (9), an alternator (22) and a fuel tank (18);
- A pneumatic compressed air motor (2) with an electro-pneumatic control valve (14), an air exhaust (8) and a compressed air tank (13),
- A clutch (6) and a gearbox (7) for applying the drive of the combustion engine and pneumatic motor (1, 2)
***Characterised**,* in that** this system additionally comprises:
- A mechanical coupling device (3) for coupling/uncoupling the respective combustion engine (1) and pneumatic motor (2), so that the drive of both may be added together;
- A pneumatic coupling device made up of a pneumatic tube (10), an electro-pneumatic valve (11) and an air filter (12) with an outlet to the outside, for connecting the air exhaust (8) of the pneumatic motor (2) to the air intake (9) of the combustion engine (1), so that comburent supercharging is provided to the said combustion engine (1); and
- An electronic control unit (19) for governing said devices and items (1, 3, 6, 7, 11, 14, 22).

2. A system according to claim 1, **characterised in that** the clutch (6) and the gearbox (7) are fitted on the combustion engine side (1).

3. A system according to claim 1, **characterised in that** the clutch (6) and the gearbox (7) are fitted on the pneumatic motor side (2).

4. A system according to claim 1, **characterised in that** only fitting the pneumatic motor (2) to the clutch (6), the pneumatic coupling device is adapted for supercharging a combustion engine which operates the compressor (17) recharging the compressed air tank (13).

5. A system according to claim 1, **characterised in that** the mechanical coupling (3) is arranged between the crankshaft (4) of the combustion engine (1) and the crankshaft (5) of the pneumatic motor (2).

6. A system according to claim 5, **characterised in that** the mechanical coupling (3) is a direct coupling.

7. A system according to claim 5, **characterised in that** the mechanical coupling (3) is a belt and pulley coupling.

8. A system according to the foregoing claims, **characterised in that** the compressed air tank (13) is pneumatically connected to the compressed air self-charging system (17) electrically supplied by a high capacity electric battery (23).

9. A system according to claim 8, **characterised in that** an external electric take-off (16) is provided for an alternative electric power supply of the compressed air self-recharging system (17).

10. A system according to claims 8-9, **characterised in that** the electronic control unit (19), which is supplied by the high capacity electric battery (23) also has a control output (190) for controlling the compressed air self-charging system (17) and another control output (191) for controlling the alternator (22), as well as respective control inputs (192, 193) for electric signals as generated from the accelerator system (20) and from the brake system (21) of the vehicle.
